# EUROPÄISCHE PATENTSCHRIFT

(11) **EP 2 449 402 B1**
(45) Veröffentlichungstag und Bekanntmachung des Hinweises auf die Patenterteilung: **02.11.2016**
(21) Anmeldenummer: 10725996.2
(22) Anmeldetag: 17.06.2010
(51) Int. Cl.: G01S 7/40, G01S 7/52, G01S 15/93, G01S 13/93

(54) **VERFAHREN ZUR ERKENNUNG UND KORREKTUR EINER FEHLSTELLUNG EINES ABSTANDSSENSORS EINES FAHRASSISTENZSYSTEMS FÜR FAHRZEUGE**
METHOD FOR DETECTING AND CORRECTING AN INCORRECT POSITION OF A DISTANCE SENSOR OF A DRIVER ASSISTANCE SYSTEM FOR VEHICLES
PROCÉDÉ POUR IDENTIFIER ET CORRIGER UNE POSITION ERRONÉE D'UN DÉTECTEUR DE DISTANCE ET SYSTÈME D'ASSISTANCE À LA CONDUITE POUR VÉHICULES

(30) Priorität: 02.07.2009 DE 102009031561
(43) Veröffentlichungstag der Anmeldung: 09.05.2012
(73) Patentinhaber: Valeo Schalter und Sensoren GmbH, 74321 Bietigheim-Bissingen (DE)
(72) Erfinder: JECKER, Nicolas, 73730 Esslingen (DE); GEIGER, Tobias, 74321 Bietigheim-Bissingen (DE)
(74) Vertreter: Pothmann, Karsten
(86) Internationale Anmeldenummer: PCT/EP2010/003666
(87) Internationale Veröffentlichungsnummer: WO 2011/000483

(56) Entgegenhaltungen:
- WO-A1-2007/026211
- DE-A1- 10 200 944
- DE-A1-102004 047 505
- DE-A1-102005 059 902
- DE-A1-102006 045 165
- DE-A1-102008 022 971

## Beschreibung

### Stand der Technik

Die Erfindung betrifft ein Verfahren zur Erkennung und bei Bedarf zu einer Korrektur einer Fehlstellung eines Abstandsensors, insbesondere in einem Fahrassistenzsystem für Fahrzeuge, gemäß dem Oberbegriff des Anspruchs 1.

Es ist an sich bekannt, dass solche Fahrassistenzsysteme oder Fahrassistenzvorrichtungen der Unterstützung eines Fahrers eines Kraftfahrzeugs bei der Durchführung bestimmter Vorgänge im Straßenverkehr dienen. In modernen Kraftfahrzeugen, im Folgenden auch kurz als Fahrzeuge bezeichnet, wird bereits eine Vielzahl von Fahrassistenzsystemen für unterschiedlichste Aufgaben eingesetzt.

So dienen beispielsweise auch als Einparksysteme bezeichnete Fahrassistenzsysteme einer Unterstützung eines Fahrers eines Fahrzeugs beim Einparken in eine Parklücke. Dabei vermisst das Einparksystem mit beispielsweise seitlich am Fahrzeug angebrachten Sensoren eine mögliche Parklücke, berechnet aus den Lückendaten eine Einparktrajektorie und steuert das Fahrzeug beispielsweise durch aktiven Lenkeingriff und/oder durch Fahranweisungen in die Parklücke. Während des Einparkvorgangs bzw. beim Einparken wird die Distanz zu die Parklücke begrenzenden Objekten durch Sensoren überwacht.

Es sind schon einige beispielsweise in Fahrassistenzsystemen verwirklichte Verfahren und Systeme zur Umfelderfassung bekannt, die anhand eines oder mehrerer seitlich am Fahrzeug angebrachter Abstandsensoren die Umgebung abtasten und geometrische Daten extrahieren, beispielsweise um eine Parklücke in einer Reihe beispielsweise längs des Straßenrands parkender Fahrzeuge zu entdecken bzw. zu erkennen, etwa um den Fahrer auf eine solche Parklücke aufmerksam zu machen, oder im Rahmen eines oben beschriebenen Einparksystems, um nur einige Anwendungen zu nennen. Diese bekannten Verfahren und Systeme nutzen die Eigenschaft, dass Objekte der Umgebung, beispielsweise Hindernisse oder parkende Fahrzeuge, die quer zu den Abstandsensoren bzw. deren Erfassungsrichtung relativ bewegt werden, ein Signalprofil erzeugen, das bereits eine zumindest grobe Übereinstimmung mit der Geometrie Umgebung aufweist. Beispielsweise stellt eine mit zunehmendem Abstand zu einem Hindernis fallende Flanke den Beginn einer Parklücke zwischen am Straßenrand abgestellten parkenden Fahrzeugen dar, wohingegen eine mit abnehmendem Abstand steigende Flanke das Ende der Parklücke angibt.

Diese Verfahren und System funktionieren ganz gut, solange die tatsächliche, beispielsweise durch räumliche Koordinaten X, Y, Z und/oder einen oder mehrere Einbauwinkel α, γ gegebene Position bzw. Einbaulage des mindestens einen Abstandsensors am bzw. im Fahrzeug bekannt ist.

Sobald sich jedoch die bekannte Position bzw. Einbaulage, insbesondere der oder die Einbauwinkel α, γ, des mindestens einen Abstandsensors beispielsweise aufgrund eines Auf- oder Anpralls bleibend verändert und damit eine Fehlstellung des mindestens einen Abstandsensors vorliegt, können diese Verfahren und Systeme nicht mehr ordnungsgemäß arbeiten.

Für sich gesehen ist es aus der DE 196 50 863 C1 bekannt, dass eine vertikale Fehlstellung oder Dejustierung eines Abstandssensors durch Auswertung der Nickbewegung eines Fahrzeugs erkannt werden kann.

Die durch eine Fehlstellung sich ergebenden Nachteile sind beispielsweise eine erhöhte Gefahr von Kollisionen, beispielsweise mit den eine Parklücke begrenzenden parkenden Fahrzeugen, sowie eine verringerte Zuverlässigkeit derjenigen Fahrassistenzsysteme eines Fahrzeugs, die auf die extrahierten geometrischen Daten, beispielsweise zur Bahnplanung für eine Ein- und/oder Ausparktrajektorie, zugreifen.

Um diesen Nachteil zu beheben, kann es deshalb als eine Aufgabe der Erfindung angesehen werden, ein geeignetes zuverlässiges Verfahren und ein System zur Erkennung sowie gegebenenfalls Korrektur einer Fehlstellung eines Abstandsensors zu entwickeln.

DE 10 2006 045165 A1 offenbart ein Verfahren gemäß dem Oberbegriff von Anspruch 1.

WO 2007/026211 A1 offenbart die Analyse von Objektkonturen (wie Flanken etc.) mit Kurvenfitting zur Datenbereinigung, jedoch nicht zum Erkennen oder Korrigieren einer Sensorfehlstellung.

### Offenbarung der Erfindung

Die Nachteile des Standes der Technik werden bei einem erfindungsgemäßen Verfahren zur Erkennung sowie gegebenenfalls Korrektur einer insbesondere bleibenden Fehlstellung mindestens eines Abstandsensors behoben, bei dem mit dem mindestens einen Abstandsensors durch Abtasten von quer zu dem mindestens einen Abstandsensor bzw. dessen Erfassungsrichtung relativ bewegter Objekte in der Umgebung mindestens ein Signalprofil erzeugt wird, aus dem geometrische Daten extrahiert werden. Hierbei wird zunächst das mindestens eine Signalprofil beobachtet und dann in vorteilhafter Weise gemäß der Erfindung statistisch ausgewertet, wobei eine ausgeprägte Asymmetrie des mindestens einen Signalprofils als Hinweis auf eine Fehlstellung des mindestens einen Abstandsensors gedeutet wird.

Vorteile der Erfindung gegenüber dem Stand der Technik ergeben sich insbesondere dadurch, dass mit ihr eine bleibende Fehlstellung eines Abstandsensors beispielsweise eines Systems zur Umfelderfassung, das anhand der Signalprofile seitlich an einem Fahrzeug angebrachter, die Umgebung abtastender Abstandsensoren geometrische Daten extrahiert, erkannt werden kann. Mit dieser Erkenntnis können auch Einbußen der Genauigkeit von mittels eines solchen Systems zur Umfelderfassung anhand seitlich am Fahrzeug angebrachter, die Umgebung abtastender Abstandsensoren extrahierter geometrischer Daten erkannt werden. Ferner ermöglicht diese Erkenntnis auf entsprechende extrahierte geometrische Daten zugreifende Fahrassistenzsysteme und -funktionen und/oder das die geometrischen Daten extrahierende System abzuschalten und/oder zumindest den Fahrer eines Fahrzeugs über die Einbußen der Genauigkeit der entsprechenden Fahrassistenzsysteme und -funktionen in Kenntnis zu setzen.

Bei dem Abstandssensor handelt es sich bevorzugt um einen seitlich an einem Fahrzeug angebrachten Abstandssensor beispielsweise eines Systems zur Umfelderfassung, das aus einem durch Abtasten von quer zu dem Sensor bzw. dessen Erfassungsrichtung relativ bewegter Objekte der Umgebung anhand des seitlich an einem Fahrzeug angebrachten Abstandsensors erhaltenen Signalprofil geometrische Daten extrahiert.

Die statistische Auswertung der Symmetrie bzw. Asymmetrie des Signalprofils sieht besonders bevorzugt einen Vergleich der mit abnehmendem Abstand zu Objekten in der abgetasteten Umgebung steigenden Flanken mit den mit zunehmendem Abstand zu Objekten in der abgetasteten Umgebung fallenden Flanken vor. Diese vorteilhafte Ausgestaltung der Erfindung nutzt den Umstand, dass trotz unterschiedlicher Objektkonturen vorne und hinten, beispielsweise trotz unterschiedlicher Geometrie von Fronten und Hecks parkender Fahrzeuge, und trotz unterschiedlicher Relativbewegung, beispielsweise bedingt durch ein schräges, nichtparalleles Vorbei- bzw. Entlangfahren, statistisch betrachtet beide Flanken, sowohl die steigenden, als auch die fallenden, in etwa gleich sind bzw. sich auf ähnlichem Niveau befinden.

Der Vergleich der steigenden mit den fallenden Flanken kann beispielsweise durch einen Vergleich der Längen und/oder Tiefen und/oder der Winkel der Flanken erfolgen.

Eine vorteilhafte Ausgestaltung der Erfindung sieht vor, dass mittels mindestens eines in Richtung der Relativbewegung orientierten Entfernungssensors gewonnenen Entfernungswerte zur Beurteilung der Güte der extrahierten geometrischen Daten herangezogen werden. Dabei kann beispielsweise durch eine statistische Ermittlung festgestellt werden, um wie viel die aus dem Signalprofil extrahierten geometrischen Daten von durch die in Richtung der Relativbewegung orientierten Entfernungssensoren gewonnenen tatsächlichen Abmessungen beispielsweise einer Parklücke abweichen, wodurch erkannt werden kann, ab wann die Fehlstellung bzw. ab welchem Maß für die Fehlstellung diese eine Einbuße der Genauigkeit der extrahierten geometrischen Daten darstellt.

Alternativ oder zusätzlich können die mittels mindestens eines in Richtung der Relativbewegung orientierten Entfernungssensors gewonnenen Entfernungswerte zur Korrektur der extrahierten geometrischen Daten herangezogen werden. Beispielsweise können die beispielsweise während eines Einparkvorgangs in eine anhand der extrahierten geometrischen Daten erkannte Parklücke in einer Reihe beispielsweise längs des Straßenrands parkender Fahrzeuge von dem mindestens einen in Richtung der Relativbewegung orientierten Entfernungssensor, beispielsweise einem Ultraschallsensor (UPA; Ultraschall Park Assistent), gewonnenen Entfernungswerte in einen Softwarealgorithmus einfließen, mittels dem eine Fehlstellung des oder der Abstandsensoren automatisch kompensiert werden kann. So ist beispielsweise für die automatische Kompensation eine statistische Auswertung denkbar, welche berücksichtigt, um wie viel die extrahierten geometrischen Daten von den durch die in Richtung der Relativbewegung orientierten Entfernungssensoren gewonnenen tatsächlichen Abmessungen, beispielsweise einer Parklücke abweichen.

Eine andere vorteilhafte Ausgestaltung der Erfindung sieht vor, oberhalb eines vorgegebenen bzw. vorgebbaren Schwellenwerts für die Asymmetrie des Signalprofils ein Hinweis auszugeben, dass der Abstandsensor eine Fehlstellung aufweist und/oder zu reparieren ist.

Vorzugsweise wird die Fehlstellung durch Berechnung des Verhältnisses der Asymmetrie des Signalprofils quantifiziert.

Beispielsweise kann die Fehlstellung einen Einbauwinkel betreffen.

Die Beobachtung kann über eine vorgegebene bzw. vorgebbare Zeit oder über eine vorgegebene bzw. vorgebbare Strecke der Relativbewegung erfolgen.

Die Erfindung ist insbesondere in Verbindung mit einem Fahrerassistenzsystem, welches anhand eines oder mehrerer seitlich am Fahrzeug angebrachter Abstandsensoren die Umgebung abtastet und geometrische Daten extrahiert, beispielsweise um eine Parklücke in einer Reihe beispielsweise längs des Straßenrands parkender Fahrzeuge zu entdecken bzw. zu erkennen, vorteilhaft anwendbar.

Darüber hinaus ist eine besonders vorteilhafte Ausgestaltung der Erfindung denkbar, die ein auf einem computerverwendbaren Medium gespeichertes Computerprogrammprodukt betrifft. Das Computerprogrammprodukt umfasst computerlesbare Programmmittel, welche bei Ausführung des Computerprogrammprodukts auf einem Mikroprozessor mit zugehörigen Speichermitteln oder auf einem Computer diesen zur Durchführung eines oben beschriebenen, erfindungsgemäßen Verfahrens veranlassen.

### Kurze Beschreibung der Zeichnung

Ausführungsbeispiele der Erfindung sind in den Figuren der Zeichnung dargestellt und nachfolgend näher erläutert. Es zeigen:
- Fig. 1: Eine schematische Darstellung einer ersten Situation, bei der mittels eines ordnungsgemäß seitlich an einem Fahrzeug angeordneten Abstandsensors durch Abtasten der Umgebung ein Signalprofil erzeugt wird.
- Fig. 2: Eine schematische Darstellung einer zweiten Situation, bei der mittels eines in einer bleibenden Fehlstellung seitlich an einem Fahrzeug angeordneten Abstandsensors durch Abtasten der Umgebung ein Signalprofil erzeugt wird.
- Fig. 3: Eine schematische Darstellung unterschiedlich ausgebildeter Flanken des Signalprofils der in Fig.2 dargestellten Situation.
- Fig. 4: Eine schematische Darstellung von aus dem Signalprofil der in Fig. 2 dargestellten Situation extrahierten geometrischen Daten.

### Wege zur Ausführung der Erfindung

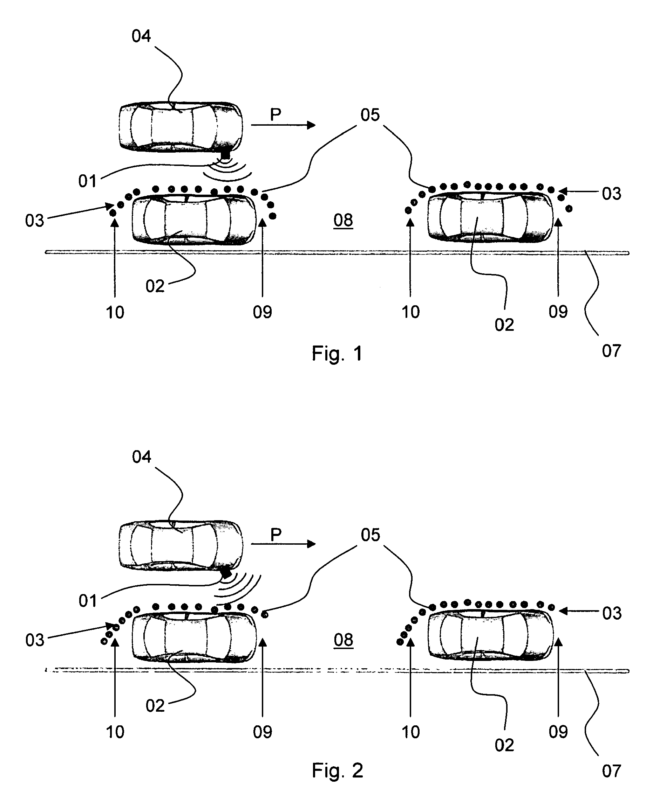

Ein erfindungsgemäßes Verfahren sieht eine Erkennung sowie gegebenenfalls Korrektur einer Fehlstellung eines Abstandsensors 01 vor, der durch Abtasten von quer zu dem Abstandsensor 01 bzw. dessen Erfassungsrichtung relativ bewegter Objekte 02 der Umgebung ein Signalprofil 03 erzeugt, aus dem geometrische Daten 12 extrahiert werden (Fig. 1, 2 und 4).

Wie in den Fig. 1 und 2 dargestellt erzeugt ein beispielsweise seitlich an einem Fahrzeug 04 angeordneter Abstandsensor 01 durch Abtasten der Umgebung bzw. von sich in der Umgebung befindlichen, quer zu dem Abstandsensor 01 relativ bewegter Objekte 02 ein aus einer Vielzahl von Abstandspunkten bzw. -daten 05 bestehendes Signalprofil 03. Die Relativbewegung des Abstandsensors 01 zu den Objekten 02, im Ausführungsbeispiel handelt es sich hierbei um am durch eine Bordsteinkante 07 schematisch dargestellten Straßenrand abgestellte parkende Fahrzeuge 02, wird beispielsweise erzeugt, indem sich das eigene Fahrzeug 04 in seiner durch den Pfeil P angedeuteten Fahrtrichtung entlang eines durch die Bordsteinkante 07 angedeuteten Straßenverlaufs bewegt.

Dieses Signalprofil 03 kann dazu verwendet werden, geometrische Daten der Umgebung zu extrahieren, beispielsweise um eine Parklücke 08 zwischen am durch die Bordsteinkante 07 schematisch dargestellten Straßenrand abgestellten parkenden Fahrzeugen 02 zu erkennen bzw. zu entdecken. Beispielsweise stellt eine mit zunehmendem Abstand zu einem parkenden Fahrzeug 02 fallende Flanke 09 den Beginn einer Parklücke 08 zwischen am durch die Bordsteinkante dargestellten Straßenrand 07 abgestellten parkenden Fahrzeugen 02 dar, wohingegen eine mit abnehmendem Abstand steigende Flanke 10 das Ende der Parklücke 08 angibt.

Um eine Fehlstellung eines beispielsweise zu obigem Zweck an bzw. in einem Fahrzeug 04 angeordneten Abstandsensors 01 zu erkennen sowie gegebenenfalls zu korrigieren sieht ein erfindungsgemäßes Verfahren vor, dass das Signalprofil 03 beobachtet und statistisch ausgewertet wird, wobei eine ausgeprägte Asymmetrie des Signalprofils 03 als Hinweis auf eine Fehlstellung des Abstandsensors 01 gedeutet wird.

Die Erfindung bedient sich dabei vorzugsweise der nachfolgend beschriebenen Eigenschaft des Signalprofils 03.

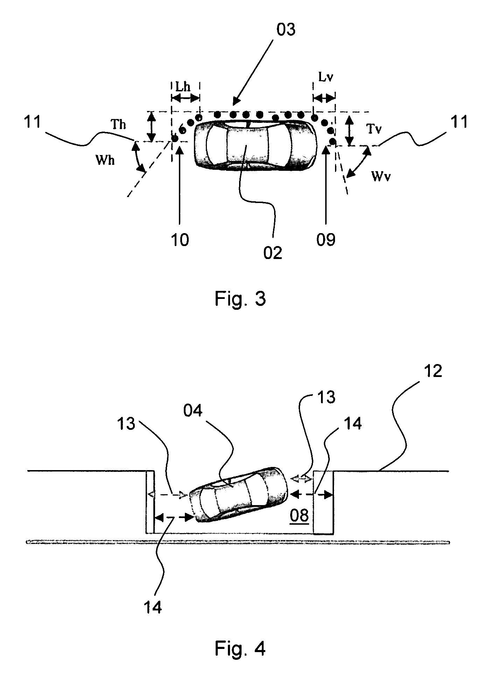

Im Falle eines wie in Fig. 1 dargestellt ordnungsgemäß unter bekannter Position bzw. Einbaulage, hier unter einem Winkel von 90° zu der in den Fig. 1 und 2 mit dem Pfeil P der Fahrtrichtung übereinstimmenden Längsachse des eigenen Fahrzeugs 04 angeordneten Abstandsensors 01, weist das Signalprofil 03 in einer statistischen Auswertung in etwa einen beispielsweise durch gleiche Längen Lᵥ, Lₕ (Fig. 3) gegebenen gleichen Verlauf der mit zunehmendem Abstand zu einem parkenden Fahrzeug 02 fallenden Flanken 09 und der mit abnehmendem Abstand steigenden Flanken 10 auf.

Befindet sich der Abstandsensor 01 jedoch, wie in Fig. 2 dargestellt, beispielsweise nach einem Auf- oder Anprall, in einer bleibenden Fehlstellung, so sind die fallenden Flanken 09 und die steigenden Flanken 10 wie in Fig. 3 dargestellt statistisch betrachtet unterschiedlich ausgeprägt. So weisen die fallenden Flanken 09 und die steigenden Flanken 10 des Signalprofils 03 beispielsweise unterschiedliche Längen Lᵥ, Lₕ und/oder unterschiedliche Tiefen Tᵥ, Tₕ und/oder einen gegenüber der Achse 11 der Relativbewegung unterschiedlichen eingeschlossenen Winkel Wᵥ, Wₕ auf.

Die aus dem durch Abtasten von quer zu dem Abstandsensor 01 bzw. dessen Erfassungsrichtung relativ bewegter Objekte 02 der Umgebung erzeugten Signalprofil 03 extrahierten geometrische Daten 12 können beispielsweise wie in Fig. 4 angedeutet, mittels anhand mindestens eines in Richtung 11 der Relativbewegung orientierten Entfernungssensors, beispielsweise jeweils mindestens einem an der Vorder- und an der Rückseite des eigenen Fahrzeugs 04 angeordneten Ultraschallsensors bzw. UPA-Sensors gewonnener Entfernungswerte 13 im Hinblick auf ihre Güte beurteilt werden. Dabei wird beispielsweise durch eine statistische Ermittlung festgestellt, um wie viel die aus dem Signalprofil 03 extrahierten geometrischen Daten 12 bzw. der hieraus hervorgehenden Abstände 14 von durch die in Richtung 11 der Relativbewegung orientierten Entfernungssensoren gewonnenen tatsächlichen Abmessungen 13 beispielsweise einer Parklücke 08 abweichen, wodurch erkannt werden kann, ab wann die Fehlstellung bzw. ab welchem Maß für die Fehlstellung des Abstandsensors 01 diese eine Einbuße der Genauigkeit der extrahierten geometrischen Daten 12 darstellt.

Wichtig ist hervorzuheben, dass es grundsätzlich möglich ist, die mittels mindestens eines in Richtung 11 der Relativbewegung orientierten Entfernungssensors gewonnenen Entfernungswerte zur Korrektur der extrahierten geometrischen Daten 12 heranzuziehen. Beispielsweise können die beispielsweise während eines Einparkvorgangs in eine anhand der extrahierten geometrischen Daten 12 erkannte Parklücke 08 in einer Reihe beispielsweise längs des Straßenrands parkender Fahrzeuge 02 von dem mindestens einen in Richtung 11 der Relativbewegung orientierten Entfernungssensor gewonnenen Entfernungswerte 13 in einen Softwarealgorithmus einfließen, mittels dem eine Fehlstellung des Abstandsensors 01 automatisch kompensiert werden kann. Wird eine Abweichung oberhalb eines Schwellenwerts festgestellt, kann beispielsweise an den Fahrer des eigenen Fahrzeugs 04 ein Hinweis auszugeben werden, dass der Abstandsensor 01 eine Fehlstellung aufweist und/oder zu reparieren ist.

Darüber hinaus ist wichtig hervorzuheben, dass die Fehlstellung durch Berechnung des Verhältnisses der Asymmetrie des Signalprofils 03 quantifiziert werden kann. So verhält sich beispielsweise die Asymmetrie des Signalprofils 03 bei bleibender Fehlstellung des Abstandsensors 01 über einen bestimmten Bereich der Fehlstellung linear zum Winkel der Fehlstellung z. B. gegenüber der Längsachse des eigenen Fahrzeugs 04.

## Patentansprüche

1. Verfahren zur Erkennung und gegebenenfalls Korrektur einer Fehlstellung eines Abstandsensors (01) eines Fahrzeugs (04), mittels dem durch Abtasten von quer zur Erfassungsrichtung des Abstandssensors (01) relativ bewegter Objekte (02) in der Umgebung ein aus einer Vielzahl von Abstandsdaten (05) bestehendes Signalprofil (03) erzeugt wird, aus dem geometrische Daten (12) extrahiert werden, um eine Parklücke (08) zwischen parkenden Fahrzeugen (02) bei einer Vorbeifahrt des Fahrzeugs (04) zu erkennen wobei eine mit zunehmendem Abstand zu einem parkenden Fahrzeug (02) fallende Flanke (09) den Beginn einer Parklücke (08) und eine mit abnehmendem Abstand zu einem parkenden Fahrzeug (02) steigende Flanke (10) das Ende der Parklücke (08) angibt, und wobei das Signalprofil (03) beobachtet und statistisch ausgewertet wird um eine Fehlstellung des Abstandsensors (01) zu erkennen, **dadurch gekennzeichnet, dass** die statistische Auswertung einen Vergleich der mit abnehmendem Abstand zu Objekten (02) in der Umgebung steigenden Flanken (10) mit den mit zunehmendem Abstand zu Objekten (02) in der Umgebung fallenden Flanken (09) vorsieht und , wobei eine ausgeprägte Asymmetrie des Signalprofils (03) als Hinweis auf eine Fehlstellung des Abstandsensors (01) gedeutet wird.

2. Verfahren nach Anspruch 1, **dadurch gekennzeichnet, dass** es sich bei dem Abstandssensor (01) um einen seitlich an einem Fahrzeug (04) angebrachten Abstandssensor (01) handelt.

3. Verfahren nach einem der vorhergehenden Ansprüche, **dadurch gekennzeichnet, dass** oberhalb eines vorgegebenen Schwellenwerts für die Asymmetrie des Signalprofils (03) ein Hinweis ausgegeben wird, dass der Abstandsensor (01) eine Fehlstellung aufweist und/oder zu reparieren ist.

4. Verfahren nach einem der vorhergehenden Ansprüche, **dadurch gekennzeichnet, dass** die Fehlstellung einen Einbauwinkel betrifft.

5. Verfahren nach einem der vorhergehenden Ansprüche, **dadurch gekennzeichnet, dass** die Beobachtung über eine vorgegebene Zeit erfolgt.

6. Verfahren nach einem der Ansprüche 1 bis 4, **dadurch gekennzeichnet, dass** die Beobachtung über eine vorgegebene Strecke der Relativbewegung erfolgt.

## Claims

1. Method for detecting and possibly correcting an incorrect position of a distance sensor (01) of a vehicle (04), by means of which a signal profile (03) consisting of a multiplicity of items of distance data (05) is generated by scanning objects (02) moving transversely relative to the sensing direction of the distance sensor (01) in the surrounding area, from which signal profile geometrical data (12) are extracted in order to detect a parking space (08) between parked vehicles (02) as the vehicle (04) passes by, wherein an edge (09) falling with increasing distance from a parked vehicle (02) indicates the start of a parking space (08) and an edge (10) rising with decreasing distance from a parked vehicle (02) indicates the end of the parking space (08), and wherein the signal profile (03) is observed and statistically evaluated in order to detect an incorrect position of the distance sensor (01), **characterized in that** the statistical evaluation provides for a comparison of the edges (10) rising with decreasing distance from objects (02) in the surrounding area with the edges (09) falling with increasing distance from objects (02) in the surrounding area, wherein a pronounced asymmetry of the signal profile (03) is interpreted as an indication of an incorrect position of the distance sensor (01).

2. Method according to Claim 1, **characterized in that** the distance sensor (01) is a distance sensor (01) laterally fitted to a vehicle (04).

3. Method according to one of the preceding claims, **characterized in that**, above a predefined threshold value for the asymmetry of the signal profile (03), an indication that the distance sensor (01) has an incorrect position and/or needs to be repaired is output.

4. Method according to one of the preceding claims, **characterized in that** the incorrect position relates to an installation angle.

5. Method according to one of the preceding claims, **characterized in that** the observation is carried out over a predefined time.

6. Method according to one of Claims 1 to 4, **characterized in that** the observation is carried out over a predefined distance of the relative movement.

## Revendications

1. Procédé d'identification et le cas échéant de correction du mauvais positionnement d'un capteur de distance (01) d'un véhicule (04), au moyen duquel un profil de signal (03) constitué d'une pluralité de données de distance (05) est généré par balayage d'objets (02) déplacés de manière relative dans l'environnement transversalement à la direction de détection du capteur de distance (01), profil de signal à partir duquel des données géométriques (12) sont extraites afin d'identifier un emplacement de stationnement (08) entre des véhicules en stationnement (02) lors d'un passage du véhicule (04), dans lequel un front descendant (09) associé à une augmentation de la distance par rapport à un véhicule en stationnement (02) indique le début d'un emplacement de stationnement (08) et un front montant (10) associé à une diminution de la distance par rapport à un véhicule en stationnement (02) indique l'extrémité de l'emplacement de stationnement (08), et dans lequel le profil de signal (03) est observé et est évalué statistiquement afin d'identifier un mauvais positionnement du capteur de distance (01), **caractérisé en ce que** l'évaluation statistique consiste à comparer les fronts montants (10) associés à une diminution de la distance par rapport à des objets (02) se trouvant dans l'environnement aux fronts descendants (09) associés à une augmentation de la distance par rapport à des objets (02) se trouvant dans l'environnement, et dans lequel une asymétrie prononcée du profil de signal (03) est interprétée comme étant une indication d'un mauvais positionnement du capteur de distance (01).

2. Procédé selon la revendication 1, **caractérisé en ce que** le capteur de distance (01) est un capteur de distance (01) monté latéralement sur un véhicule (04).

3. Procédé selon l'une quelconque des revendications précédentes, **caractérisé en ce qu'**au-dessus d'une valeur de seuil prédéfinie de l'asymétrie du profil de signal (03), il est signalé que le capteur de distance (01) présente un mauvais positionnement et/ou doit être réparé.

4. Procédé selon l'une quelconque des revendications précédentes, **caractérisé en ce que** le mauvais positionnement concerne un angle de montage.

5. Procédé selon l'une quelconque des revendications précédentes, **caractérisé en ce que** l'observation est effectuée au cours d'un temps prédéfini.

6. Procédé selon l'une quelconque des revendications 1 à 4, **caractérisé en ce que** l'observation est effectuée sur une étendue prédéfinie du mouvement relatif.
